Europäisches Patentamt

European Patent Office

Office européen des brevets

(19)

(11) Veröffentlichungsnummer: **0 283 759**
**B1**

(12) **EUROPÄISCHE PATENTSCHRIFT**

(45) Veröffentlichungstag der Patentschrift:
11.07.90

(51) Int. Cl.⁵: **C01B 25/00**

(21) Anmeldenummer: **88102880.7**

(22) Anmeldetag: **26.02.88**

(54) Stabilisierter roter Phosphor sowie Verfahren zu seiner Herstellung.

(30) Priorität: **27.03.87 DE 3710170**

(43) Veröffentlichungstag der Anmeldung:
**28.09.88 Patentblatt 88/39**

(45) Bekanntmachung des Hinweises auf die Patenterteilung:
**11.07.90 Patentblatt 90/28**

(84) Benannte Vertragsstaaten:
**AT BE CH DE FR GB IT LI NL SE**

(56) Entgegenhaltungen:
**EP-A- 0 004 305**
**EP-A- 0 195 131**
**DE-A- 2 646 835**
**DE-A- 2 705 042**
**DE-B- 2 655 739**
**US-A- 2 635 953**

(73) Patentinhaber: **HOECHST AKTIENGESELLSCHAFT,
Postfach 80 03 20, D-6230 Frankfurt am Main 80(DE)**

(72) Erfinder: **Staendeke, Horst, Dr., Alte Honrather
Strasse 22, D-5204 Lohmar(DE)**
Erfinder: **Thümmler, Ursus, Dr., Am Kapellenbusch 27,
D-5042 Erftstadt(DE)**
Erfinder: **Adam, Wilhelm, Dr.,
Justus-von-Liebig-Strasse 21, D-6078 Neu-Isenburg(DE)**

## Beschreibung

Die vorliegende Erfindung betrifft stabilisierten, pulverförmigen, rieselfähigen roten Phosphor aus Phosphorteilchen mit einer Teilchengröße von höchstens 2 mm, sowie ein Verfahren zur Herstellung des erfindungsgemäßen Produktes.

Roter Phosphor wird bekanntlich erhalten durch termische Umwandlung des gelben Phosphors in die stabilere rote Modifikation. Der rohe, rote Phosphor mit einem Gehalt von etwa 0,5 - 1,5 Masse-% gelbem Phosphor bildet nach Beendigung der Reaktion eine kompakte Masse. Er wird unter Inertgasatmosphäre vermahlen und in wäßriger Suspension durch Kochen mit verdünnter Natronlauge vom gelben Phosphor befreit (Ullmanns Encyklopädie der technischen Chemie, 3. Auflage, 13. Band, 1962, Phosphor, Seiten 517/518, Verlag Urban und Schwarzenberg, München/Berlin). Neuerdings wird die Umwandlung in rotierenden Reaktoren vorgenommen, wobei der rote Phosphor als Pulver anfällt. Die aus dem Reaktor entnommene wäßrige Suspension von rotem Phosphor (EP-B 00 15 384) wird in Rührgefäßen mit Dampf aufgeheizt und durch portionsweise Zugabe von Natronlauge vom Restanteil von etwa 0,1 Masse-% gelbem Phosphor befreit.

Roter Phosphor wird in der Pyrotechnik sowie bei der Herstellung von Zündholzreibflächen benötigt und findet Anwendung als Flammschutzmittel für Kunststoffe wie z.B. Polyamide oder Polyurethane.

Bekanntlich findet in feuchter Atmosphäre an der Oberfläche von rotem Phosphor eine chemische Reaktion statt, bei der durch Oxidation und Disproportionierung verschiedene Säuren des Phosphors der Oxidationsstufen +1 bis +5 und Phosphorwasserstoff gebildet werden.

Es bestand somit die Aufgabe, die unzureichende Oxidationsstabilität des roten Phosphors durch Stabilisierung zu verbessern.

Hierbei wird unter dem Begriff Stabilisierung eine Maßnahme verstanden, die dem roten Phosphor einen besseren Schutz gegen atmosphärische Einflüsse verleiht und so z.B. bei der Lagerung oder der weiteren Verarbeitung zu einer geringeren Bildung von Oxosäuren des Phosphors und von Phosphorwasserstoff beiträgt.

Zur Stabilisierung des roten Phosphors wurde bereits Aluminiumhydroxid vorgeschlagen (Gmelins Handbuch der anorganischen Chemie, 8. Auflage, 1964, Band Phosphor, Teil B, Seite 83, Verlag Chemie, Weinheim/Bergstrasse). Letzteres wird durch aufeinanderfolgenden Zusatz von auf 55 - 60°C erwärmten wäßrigen 10 %igen Lösungen von Natriumhydrogencarbonat und Aluminiumsulfat auf den Phosphorteilchen ausgefällt. Die wäßrige Suspension wird dann filtriert und der Filterrückstand getrocknet. Diese Verfahrensweise besitzt den Nachteil, daß zur Erzielung eines ausreichenden Stabilisierungseffektes unerwünscht große Mengen Aluminiumhydroxid angewandt werden müssen, so daß der Phosphor im Hinblick auf seine weitere Verwendung in den verschiedensten Anwendungsgebieten in einem nicht tolerierbaren Maße verunreinigt wird.

Ein anderes Verfahren zur Stabilisierung von rotem Phosphor (US-A 2 359 243) sieht vor, den roten Phosphor in einer wäßrigen 0,04 normalen Lösung von Natriumaluminat zu suspendieren, wonach während 10 Stunden Luft bei 85 - 90°C durch die Suspension geleitet, filtriert, mit heißem Wasser gewaschen und im Vakuum getrocknet wird.

Weiterhin ist es aus der US-Patentschrift 2 635 953 bekannt, zur Stabilisierung von rotem Phosphor außer Aluminiumhydroxid auch Zink- oder Magnesiumhydroxid zu verwenden.

Schließlich schlägt die DE-A 28 13 151 vor, zur Stabilisierung von rotem Phosphor ein Gemisch aus Aluminiumhydroxid und Bleihydroxid zu verwenden.

Die bisher genannten Verfahren sind nicht geeignet, mit einem Minimum an Stabilisator ein befriedigendes Ausmaß an Stabilisierung des roten Phosphors gegen Oxidation zu gewährleisten. Diese bekannten Oxidationsstabilisatoren besitzen nämlich den Nachteil, daß sie nicht ausreichend thermostabil sind, weil sie bei höheren Temperaturen Wasser abspalten. Bei der Extruderverarbeitung von Kunststoffen, die roten Phosphor als Flammschutzmittel enthalten, wobei der rote Phosphor seinerseits einen Oxidationsstabilisator enthält, ist es jedoch unerläßlich, daß der Oxidationsstabilisator thermostabil ist und selbst bei Temperaturen von über 300°C kein Wasser abspaltet und sich nicht zersetzt.

Dieser zuletzt genannte Nachteil trifft auch für das Stabilisierungsverfahren zu, das in der DE-A 26 22 296 beschrieben wird. Der Stabilisierungseffekt wird in diesem Falle dadurch erreicht, daß geringe Mengen von Metallsalzen verschiedener saurer Orthophosphorsäureester auf die Oberfläche des roten Phosphors aufgefällt werden.

Eine für eine Reihe von Einsatzgebieten unzureichende Oxidationsstabilität ergibt sich bei der Verwendung von Metallsalzen der Orthophosphorsäure gemäß DE-A 26 31 532 als Stabilisator.

Der Einsatz von Metallsalzen von Phosphonsäuren und Phosphinsäuren gemäß DE-A 26 47 093 bzw. DE-A 26 32 296 bringt zwar eine gute Thermo- und Oxidationsstabilität, jedoch sind hierfür etwa 3 - 5 Masse-% der relativ teuren Phosphon- bzw. Phosphinsäuren nötig.

Eine wirksame Verbesserung der Oxidationsstabilität von rotem Phosphor kann auch entsprechend der DE-C 26 55 739 und DE-A 27 05 042 durch Aufbringen einer dünnen Schicht eines Melamin/Formaldehyd-Harzes auf die Oberfläche der roten Phosphorteilchen erzielt werden. Diese Stabilisatoren erwiesen sich jedoch insofern als unbefriedigend, als der Stabilisierungseffekt bei Lagerung des stabilisierten Phosphors unter tropischen Bedingungen, d.h. bei 50°C und 100 % relativer Luftfeuchte, wie sie in einem Feucht/Warm-Lagerungstest simuliert werden, weitgehend verlorengeht.

Die DE-C 26 25 674 offenbart ein Mittel, das den Einsatz von rotem Phosphor in Kunststoff ermöglicht, ohne daß aufgrund der Verarbeitungstemperaturen des Kunststoffes und der Anwesenheit von geringen Mengen Wasser oder Feuchtigkeit in dem zu verarbeitenden Kunststoff Phosphorwasserstoff freigesetzt wird. Das Mittel umfaßt Epoxidharze, welche die Phosphorteilchen umhüllen, wobei der Anteil der Harze 5 - 50 Masse-% beträgt.

Schließlich wird in der DE-C 29 45 118 stabilisierter, pulverförmiger, roter Phosphor, bestehend aus Phosphorteilchen mit einer Teilchengröße von höchstens 2 mm und einem Oxidationsstabilisator beansprucht, welcher ein Gemisch aus einem Epoxidharz und Aluminiumhydroxid verwendet, wobei der Oxidationsstabilisator die Phosphorteilchen in Form einer dünnen Schicht umhüllt.

Überraschenderweise wurde nun gefunden, daß die Oxidationsstabilität des roten Phosphors, der gemäß den vorgenannten Schriften - nämlich DE-C 26 55 739 und DE-A 27 05 042 - durch Aufbringen von Melamin/Formaldehyd-Harzen stabilisiert wurde, durch die Verwendung von Metallhydroxiden als Costabilisatoren noch deutlich verbessert werden kann (siehe Tabelle 2, erfindungsgemäße Beispiele 1o bis 13).

Gegenstand der Erfindung ist nunmehr stabilisierter, pulverförmiger roter Phosphor aus Phosphorteilchen mit einer Teilchengröße von höchstens 2 mm, wobei die Oberfläche der Phosphorteilchen mit einer dünnen Schicht eines Oxidationsstabilisators bedeckt ist, und wobei der Oxidationsstabilisator aus mindestens einem in Wasser schwer- oder unlöslichen Metallhydroxid und aus einem Polykondensationsprodukt aus Melamin und Formaldehyd besteht. Die Gesamtmenge des Oxidationsstabilisators beträgt hierbei 1,1 bis 25 Masse-%, bezogen auf die Menge des roten Phosphors. Insbesondere beläuft sich der Metallhydroxidanteil auf 0,1 bis 5 Masse-% und der Melamin/Formaldehydharz-Anteil auf 1 bis 20 Masse-%, jeweils bezogen auf die Menge des roten Phosphors.

Als Metallhydroxid werden gemäß der Erfindung und in vorteilhafter Weise die Hydroxide von Aluminium, Silicium, Titan, Chrom, Mangan, Zink, Germanium, Zirkon, Niob, Cadmium, Zinn, Blei, Wismut und/oder Cer eingesetzt.

Das Verfahren zur Herstellung des stabilisierten, pulverförmigen, roten Phosphors besteht erfindungsgemäß darin, daß man in eine wäßrige Suspension des roten Phosphors ein wasserlösliches Metallsalz einträgt, einen von den optimalen Fällungsbedingungen für das jeweilige Metallhydroxid abhängigen pH-Wert von 4 - 9 einstellt, nach Zugabe einer wäßrigen Lösung eines Vorkondensates aus Melamin und Formaldehyd das Gemisch innig vermischt, während 0,5 - 3 Stunden bei einer Temperatur von 40 bis 100°C reagieren und dabei das Vorkondensat aushärten läßt und schließlich die Phosphorteilchen nach Filtration bei erhöhter Temperatur trocknet.

Vorteilhafterweise sollte die abschließende Trocknung bei Temperaturen von 80 bis 120°C im Stickstoffstrom durchgeführt werden.

Das Molverhältnis von Melamin : Formaldehyd im Vorkondensat kann erfindungsgemäß bei oder zwischen 1 : 1 bis 1 : 6, vorzugsweise bei 1 : 1,2 bis 1 : 1,8, liegen.

Zur Durchführung des Verfahren wurden im Handel erhältliche Ausgangsprodukte eingesetzt. Im einzelnen handelt es sich hierbei um folgende Produkte:

1. ® Madurit MW 815, Cassella Aktiengesellschaft, Frankfurt/Main,
2. ® Madurit MW 909, Cassella Aktiengesellschaft, Frankfurt/Main,
3. ® Madurit-Härter VMH 3843, Cassella Aktiengesellschaft, Frankfurt/Main.

Das unter 1. aufgeführte Produkt ist ein teilverätherte Melamin/Formaldehyd-Harz in Form einer 75 %igen wäßrigen Lösung, die eine dynamische Viskosität von 300 - 500 mPa•s (bei 23°C), einen pH-Wert von 8,2 - 9,2 (bei 23°C) und eine Dichte von 1,20 - 1,25 g/ml (bei 23°C) aufweist.

Das unter 2. aufgeführte Melamin/Formaldehyd-Harz ist im ungehärteten Zustand ein Pulver, dessen 50 %ige wäßrige Lösung eine dynamische Viskosität von ca. 30 mPa•s (bei 20°C), einen pH-Wert von 9 bis 10 (bei 20°C) und eine Dichte von 1,21 bis 1,23 g/ml (bei 20°C) besitzt.

Der unter 3. aufgeführte Härtungsbeschleuniger ist ein wäßrige Aminlösung, die einen pH-Wert von 6,2 - 7,0 (bei 20°C), eine Dichte von 1,16 - 1,17 g/ml (bei 20°C) und einen Brechungsindex von 1,392 - 1,400 (bei 25°C) aufweist.

Die nachfolgenden Ausführungsbeispiele und Tabellen dienen der näheren Erläuterung der Erfindung:

Bestimmung der Oxidationsstabilität

Die Bestimmung der Oxidationsstabilität wurde nach einem Feucht/Warm-Lagerungstest durchgeführt.

Hierzu wurden 5,0 g roter phosphor in eine Kristallisierschale mit einem Durchmesser von 50 mm eingewogen und die Schale in einem geschlossenen Glasgefäß 168 Stunden bei 50°C und 100 % relativer Luftfeuchtigkeit gelagert. Der hierbei gebildete Phosphorwasserstoff wurde entweder durch einen Luft-strom (10 l/h) aus dem Glasgefäß ausgetrieben, in einer Gaswaschflasche mit 2,5 masse%iger Quecksilber(II)-chloridlösung zur Reaktion gebracht und die Menge der dabei entstandenen Salzsäure titrimetrisch bestimmt oder mit Hilfe eines DRÄGER-Röhrchens "Phosphorwasserstoff 5o/a" erfaßt.

Zur Bestimmung des Gehaltes an den verschiedenen Oxosäuren des Phosphors wurde die Phosphor-

probe in ein 250 ml-Becherglas übergeführt, mit 200 ml 1 %iger Salzsäure versetzt, 10 Minuten zum Sieden erhitzt und anschließend filtriert. Im Filtrat erfolgte dann die Bestimmung des säurelöslichen Phosphors nach der photometrischen Molybdato-Vanadato-Phosphorsäure-Methode.

Zur Bestimmung des Ausgangswertes an säurelöslichem Phosphor wird der rote Phosphor dem gleichen Analysenverfahren ohne voraufgegangene Feucht/Warm-Lagerung unterzogen. Dieser Wert wird dann bei der Ermittlung des Gehaltes an säurelöslichem Phosphor nach der Feucht/Warm-Lagerung in Abzug gebracht.

Beispiel 1 (Vergleichsbeispiel)

5oo ml einer wäßrigen Phosphorsuspension mit einem Gehalt von 25o g rotem Phosphor wurden in einem 2 I-Rührreaktor aus Glas mit 25o ml Wasser verdünnt und auf 60°C erwärmt. Dann wurden 2,0 g Aluminiumhydrixid in 20 ml 50 %iger Natronlauge gelöst und der PHOSPHOR ROT-Suspension zugesetzt. Durch Zugabe von 5%iger Schwefelsäure wurde ein pH-Wert von 8 eingestellt; die Suspension wurde anschließend 1 Stunde bei 60°C gerührt.

Nach der Filtration wurde der Filterrückstand mit Wasser gewaschen und bei 100°C im Stickstoffstrom getrocknet. Bei der Analyse wurde ein Aluminiumhydroxidgehalt von 0,79 % ermittelt.

Die Werte für die Oxidationsstabilität sind in Tabelle 1 aufgeführt.

Beispiel 2 (Vergleichsbeispiel)

Es wurde analog Beispiel 1 gearbeitet, wobei jedoch 3,0 g Aluminiumhydroxid eingesetzt wurden. Bei der Analyse wurde ein Aluminiumhydroxidgehalt von 1,18 % ermittelt.

Die Werte für die Oxidationsstabilität sind in Tabelle 1 aufgeführt.

Beispiel 3 (Vergleichsbeispiel)

Es wurde analog Beispiel 1 gearbeitet, wobei jedoch 5,0 g Aluminiumhydroxid eingesetzt wurden.
Bei der Analyse wurde ein Aluminiumhydroxidgehalt von 1,94 % ermittelt.
Die Werte für die Oxidationsstabilität sind in Tabelle 1 aufgeführt.

Beispiel 4 (Vergleichsbeispiel)

5oo ml einer wäßrigen Phosphorsuspension mit einem Gehalt von 25o g rotem Phosphor wurden in einem 2 I-Rührreaktor aus Glas mit 5oo ml Wasser verdünnt und auf 6o°C erwärmt. Dann wurde durch Zugabe von 5 %iger Phosphorsäure ein pH-Wert von 5 eingestellt, der nach Zugabe von 35 g ® Madurit MW 815 nochmals auf 5 korrigiert wurde. Nach einer Rührzeit von 1 Stunde bei einer Temperatur von 6o°C wurde die Suspension filtriert. Der Filterrückstand wurde mit Wasser gewaschen und bei 1oo°C im Stickstoffstrom getrocknet.

Der Melamin/Formaldehyd-Harzanteil im roten Phosphor betrug 6,1 %, das entspricht einer Harzausbeute von 58 %.

Die Werte für die Oxidationsstabilität sind in Tabelle 1 aufgeführt.

Beispiel 5 (Vergleichsbeispiel)

Es wurde analog Beispiel 4 gearbeitet, wobei jedoch 75 g ® Madurit MW 815 eingesetzt wurden.
Der Melamin/Formaldehyd-Harzanteil im roten Phosphor betrug 13,7 %, das entspricht einer Harzausbeute von 61 %.
Die Werte für die Oxidationsstabilität sind in Tabelle 1 aufgeführt.

Beispiel 6 (Vergleichsbeispiel)

Es wurde analog Beispiel 4 gearbeitet, wobei jedoch 18 g ® Madurit MW 909 eingesetzt wurden.
Der Melamin/Formaldehyd-Harzanteil im roten Phosphor betrug 5,3 %, das entspricht einer Harzausbeute von 75 %.
Die Werte für die Oxidationsstabilität sind in Tabelle 1 aufgeführt.

Beispiel 7 (Vergleichsbeispiel)

Es wurde analog Beispiel 4 gearbeitet, wobei jedoch 38 g ® Madurit MW 9o9 eingesetzt wurden.
Der Melamin/Formaldehyd-Harzanteil im roten Phosphor betrug 1o,7 %, das entspricht einer Harzausbeute von 71 %.
Die Werte für die Oxidationsstabilität sind in Tabelle 1 aufgeführt.

Beispiel 8 (erfindungsgemäß)

5oo ml einer wäßrigen Phosphorsuspension mit einem Gehalt von 25o g rotem Phosphor wurden in einem 2 l-Rührreaktor aus Glas mit 25o ml Wasser verdünnt und auf 60°C erwärmt. Dann wurde eine Lösung von 12,5 g Aluminiumsulfat, $Al_2(SO_4)_3$ . 18 $H_2O$, in 1oo ml Wasser zugesetzt; durch Zugabe von 5 %iger Natronlauge wurde ein pH-Wert von 5 eingestellt. Anschließend wurden 31 g ® Madurit MW 815 zugetropft. Nach einer Reaktionszeit von 2 Stunden bei einer Temperatur von 60°C wurde filtriert; der Filterrückstand wurde mit Wasser gewaschen und dann bei 100°C im Stickstoffstrom getrocknet.

Bei der Analyse wurden ein Aluminiumhydroxidgehalt von 1,16 % und ein Melamin/Formaldehydharz-Gehalt von 7,2 % ermittelt; dies entspricht einer Harzausbeute von 77 %.

Die Werte für die Oxidationsstabilität sind in Tabelle 1 aufgeführt.

Beispiel 9 (erfindungsgemäß)

Es wurde analog Beispiel 8 gearbeitet, wobei jedoch 16,5 g Aluminiumsulfat und 45 g ® Madurit MW 815 eingesetzt wurden.

Bei der Analyse wurden ein Aluminiumhydroxidgehalt von 1,53 % und ein Melamin/Formaldehydharz-Gehalt von 9,8 % ermittelt; dies entspricht einer Harzausbeute von 72 %.

Die Werte für die Oxidationsstabilität sind in Tabelle 1 aufgeführt.

Beispiel 10 (erfindungsgemäß)

Es wurde analog Beispiel 8 gearbeitet, wobei jedoch 10,0 g Aluminiumsulfat und 27 g ® Madurit MW 909 eingesetzt wurden.

Bei der Analyse wurden ein Aluminiumhydroxidgehalt von 0,94 % und ein Melamin/Formaldehydharz-Gehalt von 7,7 % ermittelt; dies entspricht einer Harzausbeute von 72 %.

Die Werte für die Oxidationsstabilität sind in Tabelle 1 aufgeführt.

Beispiel 11 (erfindungsgemäß)

Es wurde analog Beispiel 8 gearbeitet, wobei jedoch 17,5 g Aluminiumsulfat und 35 g ® Madurit MW 909 eingesetzt wurden.

Bei der Analyse wurden ein Aluminiumhydroxidgehalt von 1,63 % und ein Melamin/Formaldehydharz-Gehalt von 10,2 % ermittelt; dies entspricht einer Harzausbeute von 74 %.

Die Werte für die Oxidationsstabilität sind in Tabelle 1 aufgeführt.

Beispiel 12 (Vergleichsbeispiel)

Es wurde analog Beispiel 1 gearbeitet, wobei jedoch 7,5 g Zinksulfat ($ZnSO_4.7H_2O$), in 100 ml Wasser gelöst, eingesetzt wurden.

Bei der Analyse wurde ein Zinkhydroxidgehalt von 0,91 % ermittelt.

Die Werte für die Oxidationsstabilität sind in Tabelle 2 aufgeführt.

Beispiel 13 (Vergleichsbeispiel)

Es wurde analog Beispiel 1 gearbeitet, wobei jedoch 15 g Zinksulfat eingesetzt wurden.

Bei der Analyse wurde ein Zinkhydroxidgehalt von 1,75 % ermittelt.

Die Werte für die Oxidationsstabilität sind in Tabelle 2 aufgeführt.

Beispiel 14 (Vergleichsbeispiel)

Es wurde analog Beispiel 1 gearbeitet, wobei jedoch 37,5 g Zinksulfat eingesetzt wurden.

Bei der Analyse wurde ein Zinkhydroxidgehalt von 4,65 % ermittelt.

Die Werte für die Oxidationsstabilität sind in Tabelle 2 aufgeführt.

Beispiel 15 (erfindungsgemäß)

Es wurde analog Beispiel 10 gearbeitet, wobei jedoch 7,5 g Zinksulfat und 27 g ® Madurit MW 909 sowie 5 g ® Madurit-Härter VMH 3843 eingesetzt wurden. Das Ausfällen der Metallhydroxide und die Kondensation des Melaminharnzes wurden bei einem pH-Wert der Phosphorsuspension von 7 vorgenommen.

Bei der Analyse wurden ein Zinkhydroxidgehalt von 0,96 % und ein Melamin/Formaldehydharz-Gehalt von 8,7 % ermittelt; dies entspricht einer Harzausbeute von 81 %.

Die Werte für die Oxidationsstabilität sind in Tabelle 2 aufgeführt.

Beispiel 16 (erfindungsgemäß)

Es wurde analog Beispiel 15 gearbeitet, wobei jedoch 15 g Zinksulfat eingesetzt wurden.
Bei der Analyse wurden ein Zinkhydroxidgehalt von 1,92 % und ein Melamin/Formaldehydharz-Gehalt von 9,3 % ermittelt; dies entspricht einer Harzausbeute von 83 %.
Die Werte für die Oxidationsstabilität sind in Tabelle 2 aufgeführt.

Beispiel 17 (erfindungsgemäß)

Es wurde analog Beispiel 15 gearbeitet, wobei jedoch 7,5 g Zinn(II)-chlorid eingesetzt wurden.
Bei der Analyse wurden ein Zinn(II)-hydroxidgehalt von 1,87 % und ein Melamin/Formaldehyd-Harzgehalt von 9,3 % ermittelt; dies entspricht einer Harzausbeute von 88 %.
Die Werte für die Oxidationsstabilität sind in Tabelle 3 aufgeführt.

Beispiel 18 (erfindungsgemäß)

Es wurde analog Beispiel 15 gearbeitet, wobei jedoch 11 g Zinn(II)-chlorid eingesetzt wurden.
Bei der Analyse wurden ein Zinn(II)-hydroxidgehalt von 2,73 % und ein Melamin/Formaldehyd-Harzgehalt von 9,1 % ermittelt; dies entspricht einer Harzausbeute von 89 %.
Die Werte für die Oxidationsstabilität sind in Tabelle 3 aufgeführt.

Beispiel 19 (Vergleichsbeispiel)

Es wurde analog Beispiel 1 gearbeitet, wobei jedoch 9,0 g Cer(III)-nitrat, $Ce(NO_3)_3 \cdot 6\ H_2O$, eingesetzt wurden.
Bei der Analyse wurden ein Cer(III)-hydroxidgehalt von 1,14 % ermittelt.
Die Werte für die Oxidationsstabilität sind in Tabelle 4 aufgeführt.

Beispiel 20 (Vergleichsbeispiel)

Es wurde analog Beispiel 1 gearbeitet, wobei jedoch 21,3 g Cer(III)-nitrat eingesetzt wurden.
Bei der Analyse wurden ein Cer(III)-hydroxidgehalt von 2,36 % ermittelt.
Die Werte für die Oxidationsstabilität sind in Tabelle 4 aufgeführt.

Beispiel 21 (erfindungsgemäß)

Es wurde analog Beispiel 15 gearbeitet, wobei jedoch 5,7 g Cer(III)-nitrat und 34 g ® Madurit MW 909 eingesetzt wurden. Das Ausfällen der Metallhydroxide und die Kondensation des Melaminharzes wurden bei einem pH-Wert der Phosphorsuspension von 8 vorgenommen.
Bei der Analyse wurden ein Cer(III)-hydroxidgehalt von 1,02 % und ein Melamin/Formaldehyd-Harzgehalt von 10,0 % ermittelt; dies entspricht einer Harzausbeute von 74 %.
Die Werte für die Oxidationsstabilität sind in Tabelle 4 aufgeführt.

Beispiel 22 (erfindungsgemäß)

Es wurde analog Beispiel 21 gearbeitet, wobei jedoch 11,4 g Cer(III)-nitrat eingesetzt wurden.
Bei der Analyse wurden ein Cer(III)-hydroxidgehalt von 1,96 % und ein Melamin/Formaldehyd-Harzgehalt von 9,7 % ermittelt; dies entspricht einer Harzausbeute von 76 %.
Die Werte für die Oxidationsstabilität sind in Tabelle 4 aufgeführt.

Beispiel 23 (Vergleichsbeispiel)

Es wurde analog Beispiel 15 gearbeitet, wobei jedoch 5,0 g Mangan(II)-sulfat, $MnSO_4 \cdot H_2O$, eingesetzt wurden.
Bei der Analyse wurde ein Mangan(II)-hydroxidgehalt von 1,00 % ermittelt.
Die Werte für die Oxidationsstabilität sind in Tabelle 5 aufgeführt.

Beispiel 24 (Vergleichsbeispiel)

Es wurde analog Beispiel 1 gearbeitet, wobei jedoch 25 g Mangan(II)-sulfat eingesetzt wurden.
Bei der Analyse wurde ein Mangan(II)-hydroxidgehalt von 4,75 % ermittelt.
Die Werte für die Oxidationsstabilität sind in Tabelle 5 aufgeführt.

Beispiel 25 (erfindungsgemäß)

Es wurde analog Beispiel 15 gearbeitet, wobei jedoch 5 g Mangan(II)-csulfat und 35 g ® Madurit MW 909 eingesetzt wurden.
Das Ausfällen der Metallhydroxide und die Kondensation des Melaminharzes wurden bei einem pH-Wert der Phosphorsuspension von 9 vorgenommen.
Bei der Analyse wurden ein Mangan(II)-hydroxidgehalt von 0,94 % und ein Melamin/Formaldehyd-Harzgehalt von 9,0 % ermittelt; dies entspricht einer Harzausbeute von 69 %.
Die Werte für die Oxidationsstabilität sind in Tabelle 5 aufgeführt.

Beispiel 26 (erfindungsgemäß)

Es wurde analog Beispiel 25 gearbeitet, wobei jedoch 15 g Mangan(II)-sulfat eingesetzt wurden.
Bei der Analyse wurden ein Mangan(II)-hydroxidgehalt von 2,82 % und ein Melamin/Formaldehydharzgehalt von 8,9 % ermittelt; dies entspricht einer Harzausbeute von 71 %.
Die Werte für die Oxidationsstabilität sind in Tabelle 5 aufgeführt.

Beispiel 27 (Vergleichsbeispiel)

Es wurde analog Beispiel 1 gearbeitet, wobei jedoch 20 g einer 45 %igen Natriumsilikatlösung eingesetzt wurden.
Bei der Analyse wurden ein Siliciumhydroxidgehalt von 1,09 % (berechnet als $SiO_2$) ermittelt.
Die Werte für die Oxidationsstabilität sind in Tabelle 6 aufgeführt.

Beispiel 28 (Vergleichsbeispiel)

Es wurde analog Beispiel 1 gearbeitet, wobei jedoch 85 g einer 45 %igen Natriumsilikatlösung eingesetzt wurden.
Bei der Analyse wurden ein Siliciumhydroxidgehalt von 4,03 % (berechnet als $SiO_2$)ermittelt.
Die Werte für die Oxidationsstabilität sind in Tabelle 6 aufgeführt.

Beispiel 29 (erfindungsgemäß)

Es wurde analog Beispiel 15 gearbeitet, wobei jedoch 20 g einer 45 %igen Natriumsilikatlösung eingesetzt wurden.
Bei der Analyse wurden ein Siliciumhydroxidegehalt von 1,02 % (berechnet als $SiO_2$) und ein Melamin/Formaldehyd-Harzgehalt von 8,6 % ermittelt; dies entspricht einer Harzausbeute von 80 %.
die Werte für die Oxidationsstabilität sind in Tabelle 6 aufgeführt.

Beispiel 30 (erfindungsgemäß)

Es wurde analog Beispiel 15 gearbeitet, wobei jedoch 50 g einer 45 %igen Natriumsilikatlösung eingesetzt wurden.
Bei der Analyse wurden ein Siliciumhydroxidgehalt von 2,44 % (berechnet als $SiO_2$) und ein Melamin/Formaldehyd-Harzgehalt von von 8,2 % ermittelt; dies entspricht einer Harzausbeute von 75%.
Die Werte für die Oxidationsstabilität sind in Tabelle 6 aufgeführt.

Beispiel 31 (Vergleichsbeispiel)

Es wurde analog Beispiel 1 gearbeitet, wobei jedoch 5,2 g Blei(II)-nitrat, $Pb(NO_3)_2$, eingesetzt wurden.
Bei der Analyse wurden ein Blei(II)-hydroxidgehalt von 1,44 % ermittelt.
Die Werte für die Oxidationsstabilität sind in Tabelle 7 aufgeführt.

Beispiel 32 (Vergleichsbeispiel)

Es wurde analog Beispiel 1 gearbeitet, wobei jedoch 15,5 g Blei(II)-nitrat eingesetzt wurden.
Bei der Analyse wurde ein Blei(II)-hydroxidgehalt von 4,17 % ermittelt.
Die Werte für die Oxidationsstabilität sind in Tabelle 7 aufgeführt.

Beispiel 33 (erfindungsgemäß)

Es wurde analog Beispiel 15 gearbeitet, wobei jedoch 5,2 g Blei(II)-nitrat eingesetzt wurden.
Bei der Analyse wurden ein Blei(II)-hydroxidgehalt von 1,39 % und ein Melamin/Formaldehyd-Harzgehalt von 9,2 % ermittelt; dies entspricht einer Harzausbeute von 82 %.
Die Werte für die Oxidationsstabilität sind in Tabelle 7 aufgeführt.

Beispiel 34 (erfindungsgemäß)

Es wurde analog Beispiel 15 gearbeitet, wobei jedoch 15,5 g Blei(II)-nitrat eingesetzt wurden.
Bei der Analyse wurden ein Blei(II)-hydroxidgehalt von 3,90 % und ein Melamin/Formaldehyd-Harzgehalt von 8,6 % ermittelt; dies entspricht einer Harzausbeute von 84 %.
Die Werte für die Oxidationsstabilität sind in Tabelle 7 aufgeführt.

Beispiel 35 (Vergleichsbeispiel)

Es wurde analog Beispiel 1 gearbeitet, wobei jedoch 18,2 g Kaliumchromsulfat, $KCr(SO_4)_2 \cdot 12H_2O$, eingesetzt wurden.
Bei der Analyse wurde ein Chrom(III)-hydroxidgehalt von 1,39 % ermittelt.
Die Werte für die Oxidationsstabilität sind in Tabelle 8 aufgeführt.

Beispiel 36 (Vergleichsbeispiel)

Es wurde analog Beispiel 1 gearbeitet, wobei jedoch 54,5 g Kaliumchromsulfat eingesetzt wurden.
Bei der Analyse wurde ein Chrom(III)-hydroxidgehalt von 4,08 % ermittelt.
Die Werte für die Oxidationsstabilität sind in Tabelle 8 aufgeführt.

Beispiel 37 (erfindungsgemäß)

Es wurde analog Beispiel 15 gearbeitet, wobei jedoch 19 g Kaliumchromsulfat eingesetzt wurden.
Bei der Analyse wurden ein Chrom(III)-hydroxidgehalt von 1,37 % und ein Melamin/Formaldehyd-Harzgehalt von 9,1 % ermittelt; dies entspricht einer Harzausbeute von 86 %.
Die Werte für die Oxidationsstabilität sind in Tabelle 8 aufgeführt.

Beispiel 38 (erfindungsgemäß)

Es wurde analog Beispiel 15 gearbeitet, wobei jedoch 55 g Kaliumchromsulfat eingesetzt wurden.
Bei der Analyse wurden ein Chrom(III)-hydroxidgehalt von 3,88 % und ein Melamin/Formaldehyd-Harzgehalt von 8,6 % er mittelt; dies entspricht einer Harzausbeute von 88 %.
Die Werte für die Oxidationsstabilität sind in Tabelle 8 aufgeführt.

Tabelle 1: Bestimmung der Oxidationsstabilität

| Beispiel | Stabilisator | | Feucht/Warm-Lagerungstest bei 50°C und 100% relativer Luftfeuchte | |
| | Typ | Konzentration (%) | mg $PH_3$/g. Tag | mg P/g. Tag[2] |
| --- | --- | --- | --- | --- |
| 1 (Vergleich) | $Al(OH)_3$ | 0,79 | 0,41 | 8,77 |
| 2 (Vergleich) | $Al(OH)_3$ | 1,18 | 0,33 | 7,41 |
| 3 (Vergleich) | $Al(OH)_3$ | 1,94 | 0,27 | 5,25 |
| 4 (Vergleich)[1] | ®Madurit MW 815 | 6,1 | 0,063 | 3,53 |
| 5 (Vergleich)[1] | ®Madurit MW 815 | 13,7 | 0,042 | 3,27 |
| 6 (Vergleich)[1] | ®Madurit MW 909 | 5,3 | 0,050 | 3,16 |
| 7 (Vergleich)[1] | ®Madurit MW 909 | 10,7 | 0,039 | 2,74 |
| 8 (Erfindung) | $Al(OH)_3$ | 1,16 | 0,017 | 1,48 |
| | ®Madurit MW 815 | 7,2 | | |
| 9 (Erfindung) | $Al(OH)_3$ | 1,53 | 0,011 | 0,97 |
| | ®Madurit MW 815 | 9,8 | | |
| 10 (Erfindung) | $Al(OH)_3$ | 0,94 | 0,021 | 1,32 |
| | ®Madurit MW 909 | 7,7 · | | |
| 11 (Erfindung) | $Al(OH)_3$ | 1,63 | 0,010 | 0,82 |
| | ®Madurit MW 909 | 10,2 | | |

1) Die Stabilisierung erfolgte gemäß Beispiel 6 der DE-PS 2 655 739

2) Bestimmt wurde die Zunahme an säurelöslichem Phosphor

Tabelle 2: Bestimmung der Oxidationsstabilität

| Beispiel | Stabilisator | | Feucht/Warm-Lagerungstest bei 50°C und 100% relativer Luftfeuchte | |
| | Typ | Konzentration (%) | mg $PH_3$/g. Tag | mg P/g. Tag[1] |
|---|---|---|---|---|
| 12 (Vergleich) | $Zn(OH)_2$ | 0,91 | 0,37 | 8,84 |
| 13 (Vergleich) | $Zn(OH)_2$ | 1,75 | 0,32 | 7,20 |
| 14 (Vergleich) | $Zn(OH)_2$ | 4,65 | 0,21 | 3,34 |
| 6 (Vergleich) | ®Madurit MW 909 | 5,3 | 0,050 | 3,16 |
| 7 (Vergleich) | ®Madurit MW 909 | 10,7 | 0,039 | 2,74 |
| 15 (Erfindung) | $Zn(OH)_2$ | 0,96 | 0,005 | 0,37 |
| | ®Madurit MW 909 | 8,7 | | |
| 16 (Erfindung) | $Zn(OH)_2$ | 1,92 | 0,001 | 0,11 |
| | ®Madurit MW 909 | 9,3 | | |

1) Bestimmt wurde die Zunahme an säurelöslichem Phosphor

Tabelle 3: Bestimmung der Oxidationsstabilität

| Beispiel | Stabilisator | | Feucht/Warm-Lagerungstest bei 50°C und 100% relativer Luftfeuchte | |
| | Typ | Konzentration (%) | mg $PH_3$/g. Tag | mg P/g. Tag[1] |
|---|---|---|---|---|
| 6 (Vergleich) | ®Madurit MW 909 | 5,3 | 0,050 | 3,16 |
| 7 (Vergleich) | ®Madurit MW 909 | 10,7 | 0,039 | 2,74 |
| 17 (Erfindung) | $Zn(OH)_2$ | 1,87 | 0,013 | 0,30 |
| | ®Madurit MW 909 | 9,3 | | |
| 18 (Erfindung) | $Zn(OH)_2$ | 2,73 | 0,015 | 0,10 |
| | ®Madurit MW 909 | 9,1 | | |

1) Bestimmt wurde die Zunahme an säurelöslichem Phosphor

Tabelle 4: Bestimmung der Oxidationsstabilität

| Beispiel | Stabilisator | | Feucht/Warm-Lagerungstest bei 50°C und 100% relativer Luftfeuchte | |
| | Typ | Konzentration (%) | mg $PH_3$/g. Tag | mg P/g. Tag[1] |
|---|---|---|---|---|
| 19 (Vergleich) | $Ce(OH)_3$ | 1,14 | 0,29 | 1,21 |
| 20 (Vergleich) | $Ce(OH)_3$ | 2,36 | 0,16 | 1,18 |
| 6 (Vergleich) | ®Madurit MW 909 | 5,3 | 0,050 | 3,16 |
| 7 (Vergleich) | ®Madurit MW 909 | 10,7 | 0,039 | 2,74 |
| 21 (Erfindung) | $Ce(OH)_3$ | 1,02 | 0,008 | 0,62 |
| | ®Madurit MW 909 | 10,0 | | |
| 22 (Erfindung) | $Ce(OH)_3$ | 1,96 | 0,003 | 0,33 |
| | ®Madurit MW 909 | 9,7 | | |

1) Bestimmt wurde die Zunahme an säurelöslichem Phosphor

Tabelle 5: Bestimmung der Oxidationsstabilität

| Beispiel | Stabilisator | | Feucht/Warm-Lagerungstest bei 50°C und 100% relativer Luftfeuchte | |
|---|---|---|---|---|
| | Typ | Konzentration (%) | mg $PH_3$/g. Tag | mg P/g. Tag[1] |
| 23 (Vergleich) | $Mn(OH)_2$ | 1,00 | 0,86 | 11,21 |
| 24 (Vergleich) | $Mn(OH)_2$ | 4,75 | 0,13 | 3,09 |
| 6 (Vergleich) | ®Madurit MW 909 | 5,3 | 0,050 | 3,16 |
| 7 (Vergleich) | ®Madurit MW 909 | 10,7 | 0,039 | 2,74 |
| 25 (Erfindung) | $Mn(OH)_2$ | 0,94 | 0,005 | 0,23 |
| | ®Madurit MW 909 | 9,0 | | |
| 26 (Erfindung) | $Mn(OH)_2$ | 2,82 | 0,007 | 0,35 |
| | ®Madurit MW 909 | 8,9 | | |

1) Bestimmt wurde die Zunahme an säurelöslichem Phosphor

Tabelle 6: Bestimmung der Oxidationsstabilität

| Beispiel | Stabilisator | | Feucht/Warm-Lagerungstest bei 50°C und 100% relativer Luftfeuchte | |
|---|---|---|---|---|
| | Typ | Konzentration (%) | mg $PH_3$/g. Tag | mg P/g. Tag[1] |
| 27 (Vergleich) | $SiO_2 \cdot H_2O$ | 1,09 | 0,81 | 10,9 |
| 28 (Vergleich) | $SiO_2 \cdot H_2O$ | 4,03 | 0,78 | 9,76 |
| 6 (Vergleich) | ®Madurit MW 909 | 5,3 | 0,050 | 3,16 |
| 7 (Vergleich) | ®Madurit MW 909 | 10,7 | 0,039 | 2,74 |
| 29 (Erfindung) | $SiO_2 \cdot H_2O$ | 1,02 | 0,012 | 0,31 |
| | ®Madurit MW 909 | 8,6 | | |
| 30 (Erfindung) | $SiO_2 \cdot H_2O$ | 2,44 | 0,009 | 0,31 |
| | ®Madurit MW 909 | 8,2 | | |

1) Bestimmt wurde die Zunahme an säurelöslichem Phosphor

Tabelle 7: Bestimmung der Oxidationsstabilität

| Beispiel | Stabilisator | | Feucht/Warm-Lagerungstest bei 50°C und 100% relativer Luftfeuchte | |
|---|---|---|---|---|
| | Typ | Konzentration (%) | mg $PH_3$/g. Tag | mg P/g. Tag[1] |
| 31 (Vergleich) | $Pb(OH)_2$ | 1,44 | 0,82 | 10,8 |
| 32 (Vergleich) | $Pb(OH)_2$ | 4,17 | 0,46 | 5,2 |
| 6 (Vergleich) | ®Madurit MW 909 | 5,3 | 0,050 | 3,16 |
| 7 (Vergleich) | ®Madurit MW 909 | 10,7 | 0,039 | 2,74 |
| 33 (Erfindung) | $Pb(OH)_2$ | 1,39 | 0,020 | 0,46 |
| | ®Madurit MW 909 | 9,2 | | |
| 34 (Erfindung) | $Pb(OH)_2$ | 3,90 | 0,011 | 0,61 |
| | ®Madurit MW 909 | 8,6 | | |

1) Bestimmt wurde die Zunahme an säurelöslichem Phosphor

Tabelle 8: Bestimmung der Oxidationsstabilität

| Beispiel | Stabilisator | | Feucht/Warm-Lagerungstest bei 50°C und 100% relativer Luftfeuchte | |
| | Typ | Konzentration (%) | mg PH3/g. Tag | mg P/g. Tag[1] |
| --- | --- | --- | --- | --- |
| 35 (Vergleich) | Cr(OH)3 | 1,39 | 0,85 | 8,7 |
| 36 (Vergleich) | Cr(OH)3 | 4,08 | 0,84 | 8,9 |
| 6 (Vergleich) | ®Madurit MW 909 | 5,3 | 0,050 | 3,16 |
| 7 (Vergleich) | ®Madurit MW 909 | 10,7 | 0,039 | 2,74 |
| 37 (Erfindung) | Cr(OH)3 | 1,37 | 0,011 | 0,23 |
| | ®Madurit MW 909 | 9,1 | | |
| 38 (Erfindung) | Cr(OH)3 | 3,88 | 0,008 | 0,16 |
| | ®Madurit MW 909 | 8,6 | | |

1) Bestimmt wurde die Zunahme an säurelöslichem Phosphor

## Patentansprüche

1. Stabilisierter, pulverförmiger roter Phosphor aus Phosphorteilchen mit einer Teilchengröße von höchstens 2 mm, wobei die Oberfläche der Phosphorteilchen mit einer dünnen Schicht eines Oxidationsstabilisators bedeckt ist, dadurch gekennzeichnet, daß der Oxidationsstabilisator aus mindestens einem in Wasser schwer- oder unlöslichen Metallhydroxid und aus einem Polykondensationsprodukt aus Melamin und Formaldehyd besteht.

2. Stabilisierter roter Phosphor nach Anspruch 1, dadurch gekennzeichnet, daß die Gesamtmenge des Oxidationsstabilisators 1,1 bis 25 Masse-%, bezogen auf die Menge des roten Phosphors, beträgt.

3. Stabilisierter roter Phosphor nach Anspruch 1 oder 2, dadurch gekennzeichnet, daß der Metallhydroxidanteil sich auf 0,1 bis 5 Masse-% und der Melamin/Formaldehydharz-Anteil sich auf 1 bis 20 Masse-%, jeweils bezogen auf die Menge des roten Phosphors, beläuft.

4. Stabilisierter roter Phosphor nach Anspruch 1, 2 oder 3, dadurch gekennzeichnet, daß als Metallhydroxide die Hydroxide von Aluminium, Silicium, Titan, Chrom, Mangan, Zink, Germanium, Zirkon, Niob, Cadmium, Zinn, Blei, Wismut und/oder Cer eingesetzt werden.

5. Verfahren zur Herstellung des stabilisierten, pulverförmigen, roten Phosphors nach einem der Ansprüche 1 - 4, dadurch gekennzeichnet, daß man in eine wäßrige Suspension des roten Phosphors ein wasserlösliches Metallsalz einträgt, einen von den optimalen Fällungsbedingungen für das jeweilige Metallhydroxid abhängigen pH-Wert von 4 - 9 einstellt, nach Zugabe einer wäßrigen Lösung eines Vorkondensates aus Melamin und Formaldehyd innig vermischt, während 0,5 - 3 Stunden bei einer Temperatur von 40 bis 100°C reagieren und das Vorkondensat aushärten läßt und schließlich die Phosphorteilchen nach Filtration bei erhöhter Temperatur trocknet.

6. Verfahren nach Anspruch 5, dadurch gekennzeichnet, daß man die abschließende Trocknung bei Temperaturen von 80 bis 120°C im Stickstoffstrom durchführt.

## Claims

1. Stabilized, pulverulent red phosphorus comprising phosphorus particles having a maximum particle size of 2 mm, the surface of the phosphorus particles being covered by a thin coating of an oxidation stabilizer, wherein the oxidation stabilizer comprises at least one water-insoluble or sparingly water-soluble metal hydroxide and a product of the polycondensation of melamine and formaldehyde.

2. Stabilized red phosphorus as claimed in claim 1, wherein the total amount of the oxidation stabilizer is 1.1 to 25% by weight, relative to the amount of red phosphorus.

3. Stabilized red phosphorus as claimed in claim 1 or 2, wherein the proportion of metal hydroxide is 0.1 to 5% by weight and the proportion of melamine/formaldehyde resin is 1 to 20% by weight, in each case relative to the amount of red phosphorus.

4. Stabilized red phosphorus as claimed in claim 1, 2 or 3, wherein the metal hydroxides employed are the hydroxides of aluminum, silicon, titanium, chromium, manganese, zinc, germanium, zirconium, niobium, cadmium, tin, lead, bismuth and/or cerium.

5. A process for the preparation of stabilized, pulverulent red phosphorus as claimed in any one of claims 1–4, which comprises introducing a watersoluble metal salt into an aqueous suspension of red phosphorus, establishing a pH of 4–9, depending on the optimum precipitation conditions for the particular metal hydroxide, intimately mixing the mixture after adding an aqueous solution of a precondensate of melamine and formaldehyde, allowing the mixture to react for 0.5–3 hours at a temperature of from 40 to 100°C and allowing the precondensate to cure fully, and finally drying the phosphorus particles at elevated temperature after filtration.

6. The process as claimed in claim 5, wherein the final drying is carried out at temperatures of from 80 to 120°C in a stream of nitrogen.

**Revendications**

1. Phosphore rouge en poudre stabilisé en particules de phosphore d'une dimension de particules de 2 mm au plus, dans lequel la surface des particules de phosphore est recouverte d'une couche mince de stabilisant à l'oxydation, caractérisé en ce que le stabilisant à l'oxydation consiste en au moins un hydroxyde métallique peu soluble ou insoluble dans l'eau et un produit de polycondensation de mélamine et de formaldéhyde.

2. Phosphore rouge stabilisé selon la revendication 1, caractérisé en ce que la quantité totale du stabilisant à l'oxydation est de 1,1–25% en masse, par rapport à la quantité du phosphore rouge.

3. Phosphore rouge stabilisé selon la revendication 1 ou 2, caractérisé en ce que la proportion d'hydroxyde métallique s'élève à 0,1–5% en masse et la proportion de résine mélamine-formaldéhyde à 1–20% en masse, rapportées chacune à la quantité du phosphore rouge.

4. Phosphore rouge stabilisé selon la revendication 1, 2 ou 3, caractérisé en ce que l'on utilise comme hydroxydes métalliques les hydroxydes d'aluminium, de silicium, de titane, de chrome, de manganèse, de zinc, de germanium, de zirconium, de niobium, de cadminium, d'étain, de plomb, de bismuth et/ou de cérium.

5. Procédé pour la fabrication du phosphore rouge en poudre stabilisé selon l'une des revendications 1–4, caractérisé en ce que l'on introduit dans une suspension aqueuse du phosphore rouge un sel métallique soluble dans l'eau, on ajuste un pH de 4–9 dépendant des conditions optimales de précipitation pour l'hydroxyde métallique concerné, on mélange intimement le mélange après addition d'une solution aqueuse d'un précondensat de mélamine et de formaldéhyde, on fait réagir pendant 0,5–3 h à une température de 40 à 100°C et on fait durcir le précondensat et enfin on sèche après filtration les particules de phosphore rouge à température élevée.

6. Procédé selon la revendication 5, caractérisé en ce que l'on effectue le séchage final à des températures de 80 à 120°C.